# EUROPÄISCHE PATENTANMELDUNG

(11) **EP 0 576 816 A1**
(43) Veröffentlichungstag der Anmeldung: **05.01.1994**
(21) Anmeldenummer: 93107951.1
(22) Anmeldetag: 15.05.1993
(51) Int. Cl.: B05B 7/24, G05D 7/01, B05B 12/08

(54) **Einrichtung zur Zufuhr von Flüssigkeit und Luft zu einer Zweistoffdüse**

(30) Priorität: 27.06.1992 DE 4221156
(71) Anmelder: Lechler GmbH & Co.KG, D-7012 Fellbach (DE)
(72) Erfinder: Bendig, Lothar, W-7417 Pfullingen (DE)
(74) Vertreter: Wilhelm & Dauster Patentanwälte European Patent Attorneys

(57) **Zusammenfassung**

1. Beschrieben wird eine Regeleinrichtung (7) zur Zufuhr von Flüssigkeit und Luft zu einer Zerstäuberdüse (1) bei der in die Zuführleitung für die Luft ein Durchflußregelventil (7) zur Konstanthaltung des Durchflusses eingesetzt ist. Durch diese Maßnahme kann verhindert werden, daß die zur Düse strömende Luftmenge beim Herunterregeln des Flüssigkeitsdurchsatzes unnötig und in unerwünschter Weise ansteigt.

## Beschreibung

Die Erfindung betrifft eine Einrichtung zur Zufuhr von Flüssigkeit und Luft zu einer Zweistoffdüse, insbesondere einer Zerstäuberdüse mit innerer Mischung, bei der der Druck in der Flüssigkeitszufuhrleitung abhängig von der zu zerstäubenden Flüssigkeitsmenge einstellbar ist.

Zweistoffdüsen als Zerstäuberdüsen mit innerer Mischung sind zum Beispiel aus DE-33 25 741 C1 bekannt. Diese Düsen werden mit Flüssigkeit und Luft durch eine Einrichtung der eingangs genannten Art versorgt. Bei diesen Einrichtungen tritt das Problem auf, daß dann wenn die Durchflußmenge der Flüssigkeit, die z.B. Wasser ist, heruntergeregelt wird, die in die Düse eintretende Luftmenge, d.h. der Luftvolumenstrom automatisch größer wird. Diese Änderung des Flüssigkeits-Luftverhältnisses ist zum einen deshalb unerwünscht, weil dadurch das Zerstäubungsverhalten der Düse gestört werden kann. Durch ein unterschiedliches Flüssigkeits-Luftverhältnis kann z.B. die Größe der bei der Zerstäubung erreichten Tröpfchen, d.h. die Feinheit der Tröpfchen beeinflußt werden. Darüber hinaus ergibt sich bei heruntergeregeltem Flüssigkeitsdurchfluß auch eine für die Zerstäubung nicht mehr notwendige überschüssige Luftmenge, deren Bereitstellung kostenspielig sein kann.

Der Erfindung liegt die Aufgabe zugrunde hier Abhilfe zu schaffen und eine Einrichtung der eingangs genannten Art vorzuschlagen, mit der das einerseits unerwünschte und andererseits überflüssige Anwachsen des Luftvolumens bei abgesenkter Flüssigkeitsmenge vermieden wird.

Ausgehend von der Idee, daß es zu diesem Zweck schon vorteilhaft ist, wenn die Zunahme der Luftmenge verringert wird, besteht die Erfindung darin, daß in die Zuführleitung für Luft ein den zur Zweistoffdüse gelangenden Volumenstrom konstant haltendes Durchflußregelventil eingesetzt ist.

Durch diese Maßnahme läßt sich der Luftvolumenstrom auf konstanter Höhe halten. Bei einer Verringerung der Wassermenge ändert sich zwar das Luft-Wasserverhältnis, aber bei weitem nicht in dem Maße, wie das heute der Fall ist. Ein übermäßiger Luftverbrauch kann somit mit einfachen Mitteln verhindert werden. Auch das Zerstäubungsverhalten der Düse läßt sich in einem bestimmten Bereich halten.

Eine besonders einfache Realisierung des einzusetzenden Durchflußregelventils ergibt sich dann, wenn dieses aus einem Gehäuse besteht, das durch eine Membran in zwei Kammern unterteilt ist, von denen die eine mit einem Lufteintritt und die andere mit einem Luftaustritt versehen ist, wenn die Membran mit einem Ventilteller versehen ist, der unter der Wirkung einer Feder im Abstand zu einem dem Luftaustritt zugeordneten Ventilsitz gehalten wird und wenn die Membran außerhalb des Ventiltellers mit Öffnungen versehen ist, wobei der Querschnitt dieser Öffnung, der Querschnitt der Membran und die Kraft der Feder so aufeinander abzustimmen sind, daß bei einem vorgegebenen Luftvordruck am Lufteintritt ein Druckabfall an der Membran entsteht, der ausreicht, um ein kurzzeitiges Schließen des Ventiles am Luftaustritt zu bewirken.

Die Erfindung ist in der Zeichnung anhand eines Ausführungsbeispieles dargestellt und wird im folgenden erläutert. Es zeigen:
- Fig. 1: eine schematische Darstellung einer erfindungsgemäßen Einrichtung bei der der Zuführleitung für die Luft ein Durchflußregelventil eingesetzt ist, und
- Fig. 2: eine vergrößerte Schnittdarstellung des Durchflußregelventils, das in Fig. 1 verwendet ist.

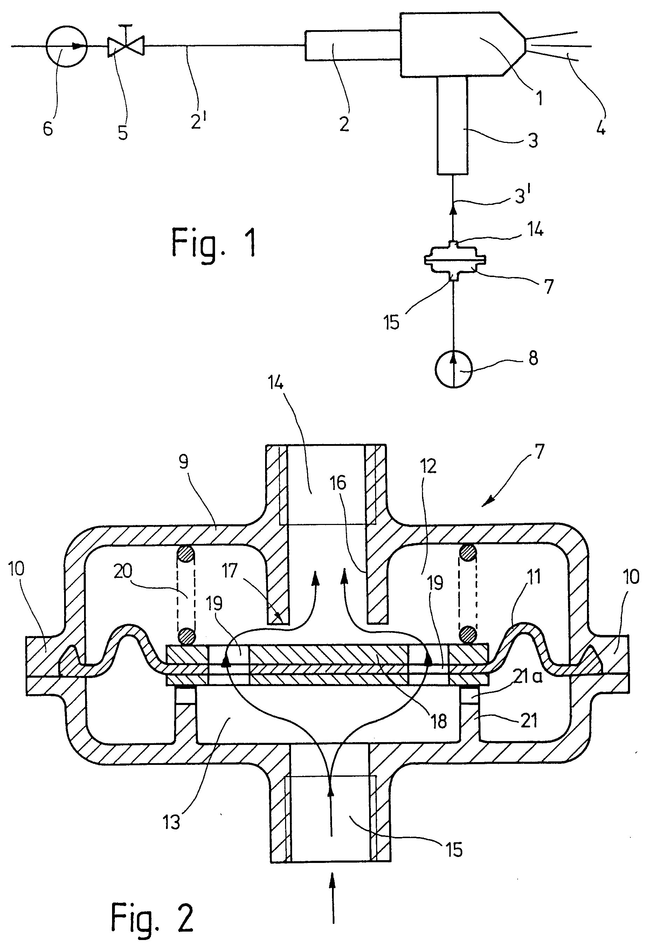

In der Fig. 1 ist schematisch eine Zweistoffzerstäubungsdüse (1) mit innerer Mischung gezeigt, die eine Zuführleitung (2) für Flüssigkeit, beispielsweise für Wasser und eine Zuführleitung (3) für Luft besitzt. Die Zweistoffzerstäubungsdüse (1) kann in der aus der DE-33 25 741 C1 bekannten Art ausgebildet sein.

Der von der Zweistoffzerstäubungsdüse (1) erzeugte Sprühstrahl, der schematisch angedeutet und mit 4 gekennzeichnet ist, hängt in seiner Zusammensetzung von dem Verhältnis der durch die Leitung (2) zugeführten Flüssigkeit zu der durch die Leitung (3) zugeführten Luft ab. Dabei stellt sich bei einem bestimmten Verhältnis von Flüssigkeit zu Luft eine bestimmte Tröpfchengröße ein, die klein genug ist um den gestellten Anforderungen zu genügen. Wird die auf diese Weise zerstäubte Flüssigkeitsmenge in kleinerem Umfang gewünscht, dann kann dies durch Verstellen eines Drosselventiles (5) das in einem der Flüssigkeitszuführleitung (2) vorgeschalteten Leitungsabschnitt (2') angeordnet ist, geschehen. Dabei wird davon ausgegangen, daß der vor dem Ventil (5) anstehende Druck der Flüssigkeit von einer Druckquelle stammt, die schematisch mit dem Bezugszeichen 6 angedeutet ist und die einen konstanten Druck für die Flüssigkeit zur Verfügung stellt.

Um zu vermeiden, daß beim Herunterregeln der durch die Zweistoffzerstäubungsdüse (1) zerstäubten Flüssigkeitsmenge die zugeführte Luftmenge zu stark ansteigt, ist in den der Zuführleitung (3) für Luft vorgeschalteten Leitungsabschnitt (3') ein Durchflußregelventil (7) eingesetzt, wobei auch hier davon ausgegangen ist, daß die durch die Zuführleitung (3) in die Düse strömende Luft von einer konstanten Druckluftquelle kommt, die schematisch mit dem Bezugszeichen 8 angedeutet ist.

Aus der Fig. 2 ist zu erkennen, daß das Durchflußregelventil (7) aus einem Gehäuse (9) besteht, das in bekannter Weise aus zwei mit Flanschen (10) zusammengesetzten Gehäusehälften aufgebaut ist. Dabei ist zwischen die Gehäusehälften eine elastische Membran (11) dicht eingeklemmt, die das Gehäuse (9) in eine obere Kammer (12) und eine untere Kammer (13) unterteilt. Die Kammer (12) ist mit einem Luftaustritt (14) und die Kammer (13) mit einem Lufteintritt (15) versehen. Der Luftaustritt (14) besitzt dabei einen in die Kammer (12) hereinragenden Stutzen (16), der einen Ventilsitz (17) bildet, der mit einem Ventilteller (18) zusammenwirkt, der in der Mitte der Membran (11) angeordnet ist. Im Bereich außerhalb des Ventiltellers (18) sind Öffnungen (19) im Ventilteller und in der Membran (11) vorgesehen, durch die Luft, die durch den Lufteintritt (15) in die Kammer (13) gelangt ist, zur Kammer (12) und - bei geöffnetem Ventil (17) - zum Luftaustritt (15) gelangen kann.

Der Ventilteller (18) ist in seinem außerhalb der Öffnungen (19) gelegenen Bereich von einer Druckfeder (20) beaufschlagt, die in der Kammer (12) liegt und sich mit ihrem unteren Ende am Ventilteller (18) und mit ihrem oberen Ende an der oberen Wand des Gehäuses (9) abstützt. Der Ventilteller (18) wird durch diese Druckfeder (20) gegen einen Anschlag (21) gedrückt, der sich in der Kammer (13) befindet und als ein ringförmiger, den Lufteintritt (15) umgebender Stutzen ausgebildet ist, der an seinem oberen Rand mit zinnenartigen Vorsprüngen (21a) versehen ist, damit der Druck in der Kammer (13) auf die gesamte Fläche der Membran (11) wirkt. Auf diesen Anschlag (21) stützt sich der außerhalb der Öffnungen (19) gelegene Bereich des Ventiltellers (18) in der in der Fig. 2 gezeigten Ausgangslage ab.

Der Querschnitt aller Öffnungen (19), der Querschnitt der Membran (11) und die Kraft der Druckfeder (20) sind nun so aufeinander abgestimmt, daß bei einem bestimmten Vordruck, der durch die Druckquelle (8) bestimmt ist, üblicherweise 4 bar, an der Membran (11) bedingt durch die Drosselung in den Öffnungen (19) ein bestimmter Druckabfall, typischerweise 0,5 bar entsteht. Dabei muß die bei diesem Druckabfall auf die Membran (11) wirkende Kraft größer sein, als die Rückstellkraft der Druckfeder (20), so daß sich das Ventil (17) schließt. In diesem Moment aber, in dem kein Druckunterschied mehr auftreten kann, da ein Druckausgleich zwischen den Kammern (13) und (12) über die Öffnungen (19) eintritt, wird der Ventilteller (18) und die Membran (11) von der Druckfeder (20) wieder zurückgedrückt. Dieser Vorgang wiederholt sich, so daß sich in der Praxis eine Zwischenlage des Ventiltellers (18) zum Ventilsitz (17) einstellen wird, bei der die Membran gerade so viel Querschnitt für den Luftaustritt (14) freigibt, daß der durch das Durchflußregelventil strömende Luftvolumenstrom konstant bleibt.

Um dies zu erreichen, ist es Vorbedingung, daß die Druckfeder (20) eine sehr weiche Kennlinie aufweist, so daß bereits kleine Änderungen des Druckabfalls an der Membran ausreichen, um die Membran (11) von der in der Fig. 2 gezeigten Stellung, in der der Luftaustritt völlig offen ist, in die Schließstellung, in der der Luftaustritt (14) über das Ventil (17) vollkommen geschlossen ist, zu bewegen.

Durch diese Maßnahme wird auf verhältnismäßig einfache Weise ein zu starkes Ansteigen des Luftvolumenstromes bei einer Absenkung der zu zerstäubenden Flüssigkeitsmenge vermieden. Unnötiger Druckluftverbrauch wird deshalb ausgeschaltet.

Gleichzeitig wird aber auch ein gewisser Rahmen für das in der Düse herrschende Flüssigkeitsluftverhältnis beibehalten, der ausreichend groß sein kann, um eine unerwünschte Änderung der Tröpfchengröße im Zerstäubungsstrahl zu vermeiden.

## Patentansprüche

1. Einrichtung zur Zufuhr von Flüssigkeit und Luft zu einer Zweistoffdüse, insbesondere einer Zerstäuberdüse mit innerer Mischung, bei der der Druck in der Flüssigkeitszuführleitung abhängig von der zu zerstäubenden Flüssigkeitsmenge einstellbar ist, dadurch gekennzeichnet, daß in die Zuführleitung (3, 3') für Luft ein den zur Zweistoffdüse (1) gelangenden Volumenstrom konstant haltendes Durchflußregelventil (7) eingesetzt ist.

2. Einrichtung nach Anspruch 1, dadurch gekennzeichnet, daß das Durchflußregelventil (7) aus einem Gehäuse (9) besteht, daß durch eine Membran (11) in zwei Kammern (12, 13) unterteilt ist, von denen die eine (13) mit einem Lufteintritt (15) und die andere (12) mit einem Luftaustritt (14) versehen ist, daß die Membran (11) mit einem Ventilteller (18) versehen, der unter der Wirkung einer Druckfeder (20) im Abstand zu einem dem Luftaustritt (14) zugeordneten Ventilsitz (17) gehalten wird, daß die Membran (11) außerhalb des Ventiltellers (18) mit Öffnungen (19) versehen ist, und daß der Querschnitt dieser Öffnungen (19), der Querschnitt der Membran (11) und die Kraft der Druckfeder (20) so aufeinander abgestimmt sind, daß bei einem vorgegebenen Luftvordruck (8) am Lufteintritt (15) ein Druckabfall an der Membran (11) entsteht, der ausreicht, um ein kurzzeitiges Schließen des Ventiles (17) am Luftaustritt (14) zu bewirken.

3. Einrichtung nach Anspruch 2, dadurch gekennzeichnet, daß die Druckfeder (20) eine sehr weiche Kennlinie aufweist.
